(19) Europäisches Patentamt / European Patent Office / Office européen des brevets

(11) **EP 3 214 579 B1**

(12) **EUROPEAN PATENT SPECIFICATION**

(45) Date of publication and mention
of the grant of the patent:
**16.11.2022 Bulletin 2022/46**

(21) Application number: **15855574.8**

(22) Date of filing: **30.10.2015**

(51) International Patent Classification (IPC):
**G06V 30/162** *(2022.01)* **G06V 30/10** *(2022.01)*
**G06V 20/62** *(2022.01)*

(52) Cooperative Patent Classification (CPC):
**G06V 30/162; G06V 20/63;** G06V 20/625;
G06V 30/10

(86) International application number:
**PCT/JP2015/080822**

(87) International publication number:
**WO 2016/068326 (06.05.2016 Gazette 2016/18)**

(54) **IMAGE PROCESSING DEVICE, CHARACTER RECOGNITION DEVICE, IMAGE PROCESSING METHOD, AND PROGRAM**

BILDVERARBEITUNGSVORRICHTUNG, ZEICHENERKENNUNGSVORRICHTUNG, BILDVERARBEITUNGSVERFAHREN, UND PROGRAMM

DISPOSITIF DE TRAITEMENT D'IMAGE, DISPOSITIF DE RECONNAISSANCE DE CARACTÈRE, PROCÉDÉ DE TRAITEMENT D'IMAGE, ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2014 JP 2014223028**

(43) Date of publication of application:
**06.09.2017 Bulletin 2017/36**

(73) Proprietor: **OMRON Corporation
Shiokoji-dori, Shimogyo-Ku
Kyoto-shi
Kyoto 600-8530 (JP)**

(72) Inventors:
• **HYUGA, Tadashi
Kyoto-shi
Kyoto 600-8530 (JP)**
• **AIZAWA, Tomoyoshi
Kyoto-shi
Kyoto 600-8530 (JP)**
• **HAMABASHIRI, Hideto
Tokyo 108-0075 (JP)**

(74) Representative: **Becker Kurig & Partner
Patentanwälte mbB
Bavariastraße 7
80336 München (DE)**

(56) References cited:
JP-A- 2003 204 459    JP-A- 2014 164 528
US-A1- 2004 184 673    US-A1- 2008 080 785
US-B1- 6 269 186

• BASURA FERNANDO ET AL: "Extreme value theory based text binarization in documents and natural scenes", PROCEEDINGS OF ICMV, 28 December 2010 (2010-12-28), pages 144-151, XP055475025,

**Description**

BACKGROUND OF THE INVENTION

1. Field of the Invention

The present invention generally relates to a type of image processing, in particular, to a type of image processing that is suitable to serve as a preprocessing of a character recognition process.

2. Description of Related Art

Character recognition technologies that involve photographing an object including a character string and recognizing and obtaining the character string from the captured image become popular. Generally, an object has a three-dimensional shape and includes various materials, so that according to a camera disposition position or an illumination condition when an image is captured, sometimes not only diffusely reflected light is photographed, but also specularly reflected light is photographed. A luminance value of the specularly reflected light, as compared with that of the diffusely reflected light, is extremely high, and with the saturation of the luminance value, the specularly reflected light becomes a reason why accuracy of a character cutout process or character recognition process decreases.

For example, binarization of an image is performed as preprocessing prior to a character recognition process. A method, referred to as dynamic binarization, is proposed as a binarization method, that is, in order to eliminate influence of a partial shadow, a threshold is dynamically determined on the basis of a luminance value in a partial region (patent document 1). In this case, if a high luminance region caused by specularly reflected light exists in a captured image, sometimes it is impossible to perform proper binarization, which exerts unfavorable influence on a subsequent character recognition process.

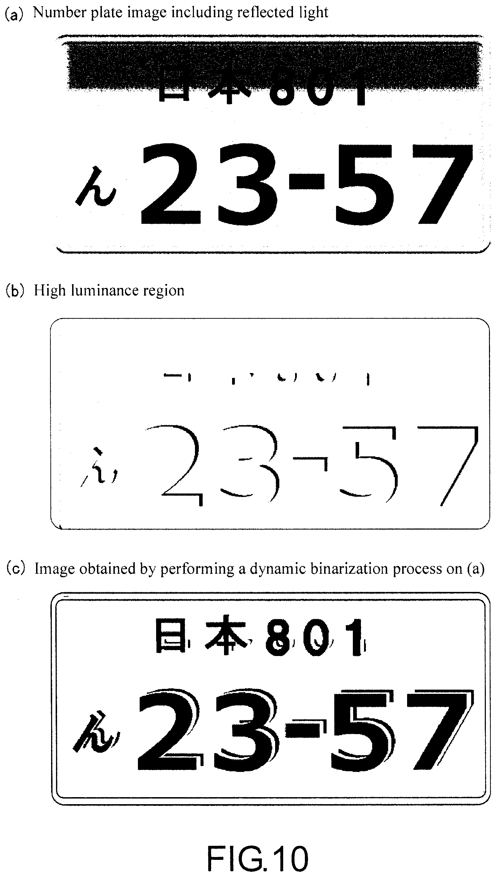

A situation, in which a number plate of a vehicle is used as an object to perform character recognition, is used as an example for further specific description. FIG. 10(a) shows an image obtained by photographing a number plate. The number plate is provided with a character or a number in an embossing manner, and a high luminance region (a saturated region) caused by specularly reflected light is sometimes generated in a stepped difference part that is embossed. FIG. 10(b) shows an example in which a region represented by black is a high luminance region. When a dynamic binarization process is performed on such images, noise may be generated because of influence of a high luminance region. FIG. 10(c) shows a binary image obtained by performing a dynamic binarization process on the image shown in FIG. 10(a). As shown in FIG. 10(c), a region which originally should be considered to have high luminance is determined to have relatively low luminance due to existence of a high luminance region caused by specularly reflected light. If cutout or recognition of a character is performed on the basis of an image with such noise, its accuracy decreases.

The description is merely an example of unfavorable influence exerted by a high luminance region (a saturated region) caused by specularly reflected light. Even in a situation in which a dynamic binarization process is not performed as preprocessing, a situation in which an object is other than a number plate, or the like, accuracy of a character recognition process decreases due to existence of a high luminance region.

Prior art document

Patent document

Patent document 1: JP2003-123023

Document US2004/0184673 A1 discloses an image processing method of making luminance correction on the basis of a luminance histogram showing luminance level distribution of image data expressing an image by a numerical value.

SUMMARY OF THE INVENTION

[Problem to be resolved by the invention]

In view of the facts, the present invention is completed and is directed to providing a technology, which enables high-accuracy character recognition to be implemented even in a situation in which a high luminance region caused by specularly reflected light or the like exists in an input image.

[Technical means for resolving the problem]

In order to achieve the objective, in the present invention, as a preprocessing of a character recognition process, a high luminance region of an image is determined, and a pixel value of the high luminance region is converted, so as to suppress unfavorable influence caused by the high luminance region generated because of specularly reflected light or the like.

Specifically, a form of the present invention is an image processing device for performing a preprocessing of an image recognition process to an input image, as defined by claim 1. a character drawn on the number plate.

Furthermore, the present invention can be mastered as an image processing device or a character recognition device including at least one part of the element. In addition, the present invention may also be mastered as an image processing method or a character recognition method. Moreover, the present invention may also be mastered as a computer program used to enable a computer to execute each step of the methods or a computer-readable storage medium that non-temporarily stores the program.

[Effect of the invention]

According to the present invention, a high luminance region, caused by specularly reflected light or the like, of an input image can be corrected, so as to suppress unfavorable influence caused by the high luminance region and implement high-accuracy character recognition.

BRIEF DESCRIPTION OF THE DRAWINGS

FIG. 1 is a brief diagram illustrating a number plate recognition system of a vehicle according to a first implementation manner;
FIG. 2 is a block diagram illustrating a structure of a character recognition device in the first implementation manner;
FIG. 3 is a flowchart illustrating a procedure of a character recognition process in the first implementation manner;
FIG. 4 is a flowchart illustrating a procedure of preprocessing (a correction process on a high luminance pixel) in the first implementation manner;
FIG. 5 is a diagram explaining a histogram of luminance obtained from an input image and a peak range obtained from the histogram;
FIG. 6 is a flowchart illustrating a procedure of clustering for obtaining a peak range in the first implementation manner;
FIG. 7 is a diagram explaining the clustering for obtaining the peak range in the first implementation manner;
FIG. 8 is a diagram illustrating images before and after a correction process on the high luminance pixel of the first implementation manner;
FIG. 9 is a flowchart illustrating a procedure of preprocessing (a correction process on a high luminance pixel) in a second implementation manner; and
FIG. 10 is a diagram explaining unfavorable influence caused by specularly reflected light.

DESCRIPTION OF THE EMBODIMENTS

Preferable forms for implementing the present invention are illustrated in detail below by referring to the accompanying drawings.

<First implementation manner>

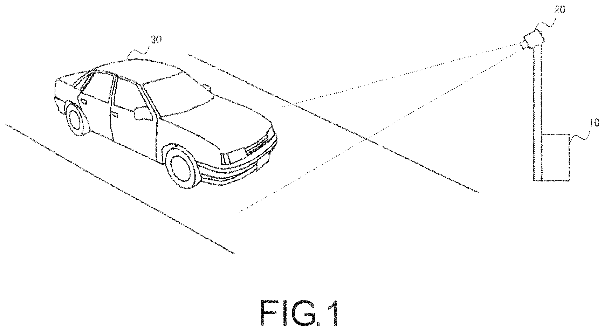

FIG. 1 is a brief diagram illustrating a number plate recognition system of a vehicle according to this implementation manner. The number plate recognition system includes: a camera 20, disposed on a lamp pole erected on a roadside and photographing a vehicle 30 on a road; and a character recognition device (an image processing device) 10, which extracts a number plate from an image captured by the camera 20, so as to determine a character recorded on the number plate.

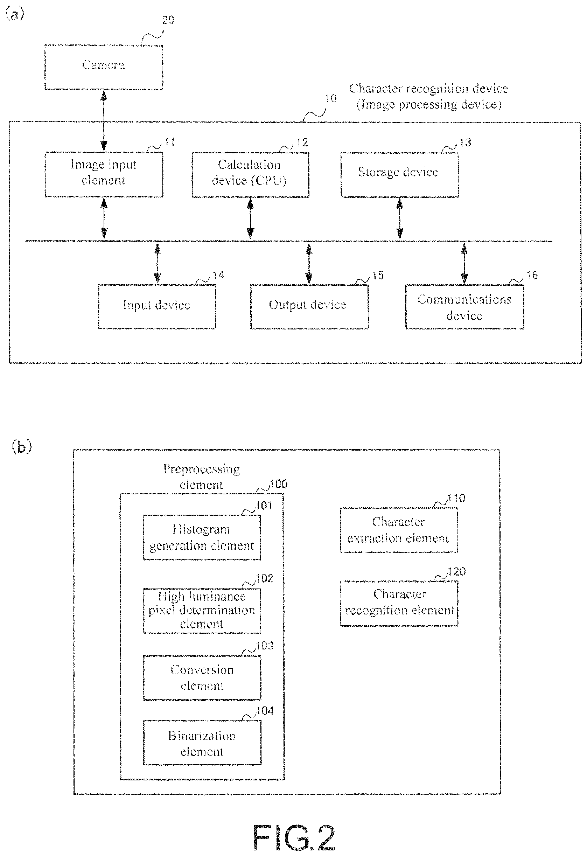

FIG. 2(a) is a diagram illustrating a hardware structure of the character recognition device 10. The character recognition device 10 includes an image input element 11, a calculation device 12, a storage device 13, an input device 14, an output device 15, and a communications device 16. The image input element 11 is an interface for receiving image data from the camera 20. In addition, in this implementation manner, the image data is directly received from the camera 20, but the image data may also be received by using the communications device 16, or the image data may be received by using a recording medium. The calculation device 12 is a general processor and executes a program stored in the storage device 13 to perform subsequent processing. The storage device 13 includes a primary storage device and a secondary storage device, stores the program executed by the calculation device 12, and stores the image data or temporary data in execution of the program. The input device 14 is a device including a keyboard, a mouse, or the like and provided for a user to input an instruction to the character recognition device. The input device 15 is a device including a display device, a speaker, or the like and provided for the character recognition device to perform output to a user. The communications device 16 is a device provided for the character recognition device 10 to perform communication with an external computer. The communications forms may be wired or wireless, and any communications standards may be adopted.

The calculation device 12 executes a program, so as to implement functions shown in FIG. 2(b). That is, the calculation device 12 implements functions of a preprocessing element 100, a character extraction element 110, and a character recognition element 120. The preprocessing element 100 includes a histogram generation element 101, a high luminance pixel determination element 102, a conversion element 103, and a binarization element 104. Processed contents of the respective element are explained below.

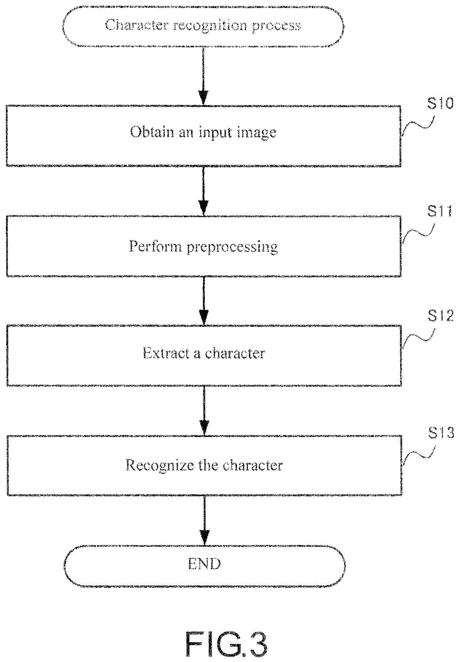

FIG. 3 is a flowchart illustrating an overall procedure of a character recognition process performed by the character recognition device 10. In step S10, the character recognition device 10 obtains image data of a photographed vehicle from the camera 20 by using the image input element 11. The character recognition device 10 extracts a number plate region of the vehicle from the received image to perform subsequent processing on the region. Extraction of the number plate can be performed by merely using an existing method such as template matching, so that descriptions thereof are omitted.

Step S11 is preprocessing performed to adapt the image data to character recognition and is performed by the preprocessing element 100. The preprocessing includes a luminance value correction process on a high luminance pixel of the image, a binarization process, a noise removal process, and the like.

In step S12, the character extraction element 110 extracts a character region from the preprocessed image and further extracts a character region of each character from the character region. In step S13, the character recognition element 120 extracts a feature of a character from each character region and matches the extracted character with each character in dictionary data to perform recognition on the extracted character. Any existing technology is applicable to cutout of a character region and an obtaining or matching process on a character feature amount. For example, a pixel feature extraction method, a contour feature extraction method, a gradient feature extraction method, or the like may be used as a method for obtaining a character feature. In addition, a method, such as a partial space method, a neural network, a Support Vector Machine (SVM), or discriminant analysis, may be used as a character recognition method.

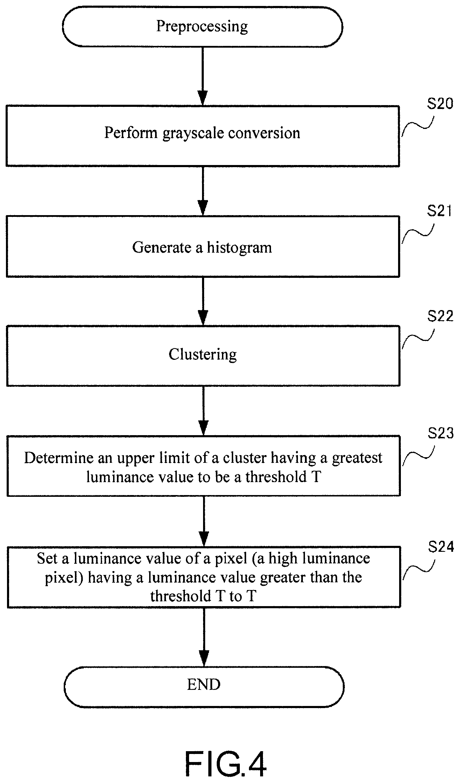

A correction process on a luminance value (a pixel value) of a high luminance pixel in feature processing, that is, preprocessing, in the present invention is described in the following. FIG. 4 is a flowchart illustrating a procedure of preprocessing, in particular, a correction process on a luminance value of a high luminance pixel.

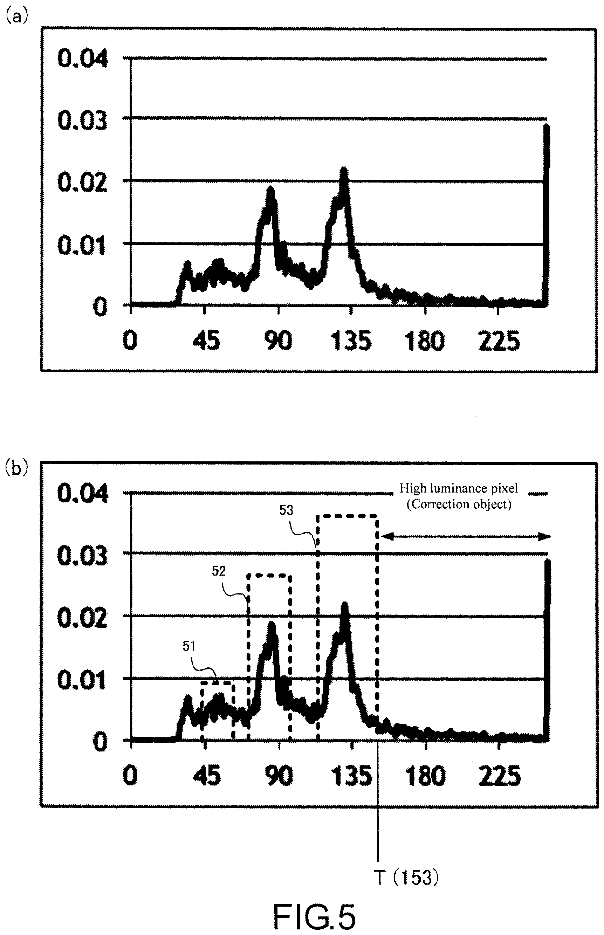

First, in step S20, grayscale conversion is performed on an input image. The number of scales of a grayscale image is not specially defined, and for example, may be set to 256 scales. In step S21, the histogram generation element 101 generates a histogram of luminance values from an image that has been converted into grayscales. In this implementation manner, a bin width of the histogram is set to 1, but the bin with can also be greater than 1. FIG. 5(a) illustrates an example of a generated histogram. In addition, longitudinal axes in FIG. 5(a) and FIG. 5(b) represent display scales (density).

In step S22, the high luminance pixel determination element 102 uses the histogram as an object to perform clustering. The clustering is directed to determining a range for obtaining a peak of luminance values and involves determining a peak range to be a cluster. A luminance value outside the peak range is determined to not belong to any cluster. The clustering in step S22 is described in more detail in the following.

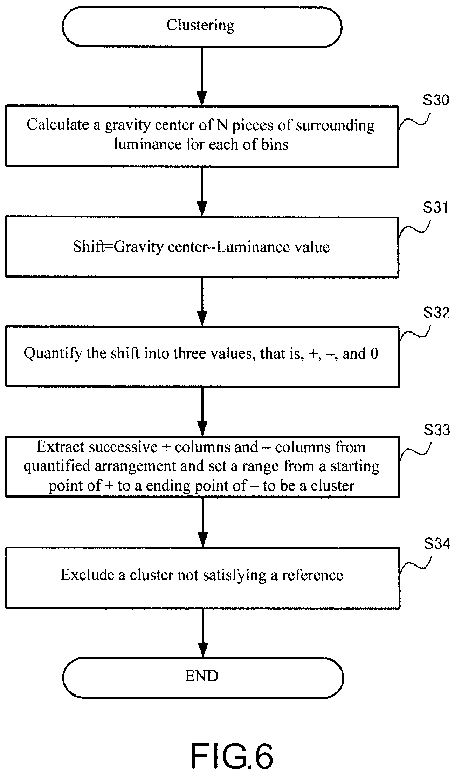

FIG. 6 is a flowchart illustrating a detailed procedure of clustering in step S22. In step S30, with regard to each of the bins (having a meaning the same as that of each of the luminance values in this implementation manner) in the histogram, a gravity center of luminance values in N pieces of surrounding luminance is calculated. For example, N is set to about 10. A gravity center luminance GLi in a luminance value Li is calculated by using the following equation.

$$GLi=\Sigma_j(Lj\times mj)/\Sigma_j(mj)$$

Herein, $\Sigma$ (sigma) (a sum) is a sum involving j and indicating a range of i-N/2 to i+N/2, and mj indicates a degree of a luminance value Lj in the histogram.

In step S31, a difference between the gravity center luminance value GLi and the luminance value Li in each bin (each luminance value) is calculated as a shift Si. That is, an equation is set as:

$$Si=GLi-Li,$$

to determine the shift Si.

In step S32, a shift in each bin (each luminance value) is quantified into three values, that is, plus (+), minus (-), and zero (0). In this implementation manner, if the shift Si is 0.5 or above, the shift Si is considered to be plus, if the shift Si is -0.5 or below, the shift Si is considered to be minus, and otherwise, the shift Si is considered to be zero. A value other than 0.5 may be also used as a threshold in the quantification. In addition, the threshold of the quantification may also be changed by using the bin width of the histogram, and for example, may also be a half of the bin width.

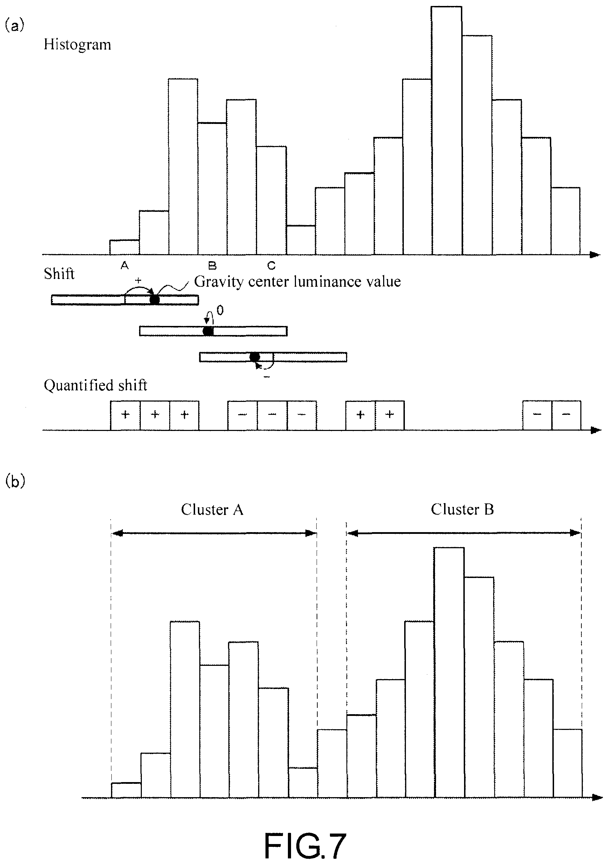

FIG. 7(a) is a diagram schematically illustrating a shift obtained from a histogram of luminance values and an example of the quantified shift. An upper segment of FIG. 7(a) illustrates an example of a histogram that serves as a processing object. A middle segment of FIG. 7(a), with respect to luminance values A, B, and C, illustrates a range (a rectangle) and a gravity center luminance value (a black circle) for obtaining surrounding luminance of the gravity center luminance value. In the drawing, a gravity center luminance value in the luminance value A is greater than the luminance value A by 0.5 or above, indicating that a quantified shift in the luminance value A is plus (+). Similarly, an absolute value of a difference between a gravity center luminance value in the luminance value B and the the luminance value B is less than 0.5, indicating that a quantified shift in the luminance value B is zero (0). Moreover, a gravity center luminance value in the luminance value C is less than the luminance value C by 0.5 or above, indicating that a quantified shift in the luminance value C is minus (-). In the drawing, gravity center luminance values are only illustrated for luminance values A, B, and C, but the same calculation is performed on all luminance values, and quantified shifts are obtained for all the luminance values. A lower segment of FIG. 7(a) illustrates quantified shifts. In addition, the drawing merely clearly shows portions of the quantified shifts that are plus and minus, and for a portion that is neither plus nor minus, the quantified shift is zero.

Return to the descriptions of the flowchart of FIG. 6. In step S33, in arrangement of quantified shifts (also referred to as quantified arrangement), two or more successive plus columns and minus columns are extracted, and a range from a starting point of the plus column to an ending point of the minus column is determined to be a cluster. A clustering result obtained by quantifying shifts shown in FIG. 7(a) is shown in FIG. 7(b). In FIG. 7(a), there are two plus columns and two minus columns respectively, and a pair corresponding to a plus column and a minus column determines two clusters as shown in FIG. 7(b).

In step S34, a cluster that does not satisfy a specified reference is excluded from the clusters obtained in step S33. The reference is that: a width of a cluster is greater than or equal to a specified threshold; or a sum of degrees (the number of pixels belonging to the cluster) in the cluster is greater than or equal to a specified threshold. A cluster not having a width is removed, and for example, a cluster is effective because it can distinguish a saturated pixel from other peaks. In a case in which an overall image is bright, a peak with a width under a greatest luminance value (which is a luminance value 255 in this implementation manner) is detected, and in a case in which over-exposure is generated because of influence of specularly reflected light and the like, a peak without a width under the greatest luminance value is detected. By regulating conditions concerning the cluster width, a pixel of a correction object can be properly determined in a case in which influence of specularly reflected light exists.

By element of the above, the clustering of step S22 illustrated in the flowchart of FIG. 4 ends. A clustering result of using the histogram shown in FIG. 5(a) as an object is shown in FIG. 5(b). In FIG. 5(b), three clusters 51, 52, and 53 are obtained.

In step S23, the high luminance pixel determination element 102 determines an upper limit value (a greatest value) of luminance values of a cluster having a greatest luminance value in the clusters obtained in step S22 to be a threshold (a reference value) T. The threshold T is used to determine whether a pixel is a high luminance pixel, and more specifically, a pixel having a luminance value greater than the threshold T is determined to be a high luminance pixel. In the example of FIG. 5 (b), the cluster 53 is a cluster having the greatest luminance value, an upper limit value (which is 153 in this example) of luminance of the cluster 53 is determined to be the threshold T, and on the basis of this, a high luminance pixel is determined. In addition, a method of determining a threshold T by adding a specified numeral value to the upper limit value may be used or when a region whose quantified shift is 0 exists in a region having a luminance value greater than the luminance value in the cluster having the greatest luminance value, a method of determining an upper limit value of a luminance value of the region to be the threshold T may be used, so that a processing range can be limited to achieve high speed processing.

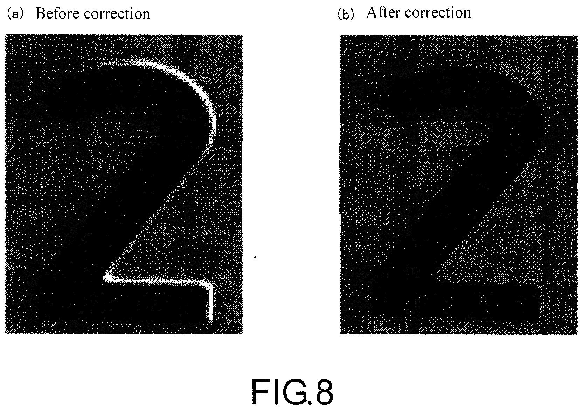

In step S24, the conversion element 103 sets a luminance value of a pixel (a high luminance pixel) having a luminance value greater than the threshold T to T. Hence, all the luminance values of the high luminance pixels in the image are replaced with a value of an upper limit value (T) of the greatest cluster. FIG. 8(a) shows a grayscale image before correction, and FIG. 8(b) shows a grayscale image after correction. As shown in the drawings, performing correction by reducing a luminance value of a high luminance pixel can eliminate influence caused by specularly reflected light.

In addition, the flowchart of FIG. 4 merely shows a correction process on a high luminance pixel, but another process, such as a noise removal process, a binarization process, or a thinning process on a binary image, may also be performed. The processes are well-known processes that are always performed, so that detailed descriptions thereof are omitted, but the binarization process is introduced. Dynamic binarization of dynamically determining a threshold on the basis of luminance values in a partial region may be used as a binarization process. Because correction is performed in a manner of eliminating high luminance pixels, unfavorable influence caused by specularly reflected light can be suppressed by element of a dynamic binarization process, so as to implement proper binarization.

According to this implementation manner, a high luminance pixel of a correction object is determined on the basis of a histogram of luminance values, so that as compared with an approach of performing correction by fixedly determining a luminance value range of a correction object, this implementation manner can suppress influence of specularly reflected light and the like more properly. In addition, influence caused by specularly reflected light can be suppressed, so that accuracy of a character recognition process can be improved.

<Second implementation manner>

The second implementation manner differs from the first implementation manner in a determination method of substituting, by the conversion element 103, a luminance value of a high luminance pixel (a correction object pixel) in a correction process. In the first implementation manner, all high luminance pixels are substituted with the threshold T, but in this implementation manner, a luminance value after correction is determined on the basis of luminance values of surrounding pixels of the correction object pixel.

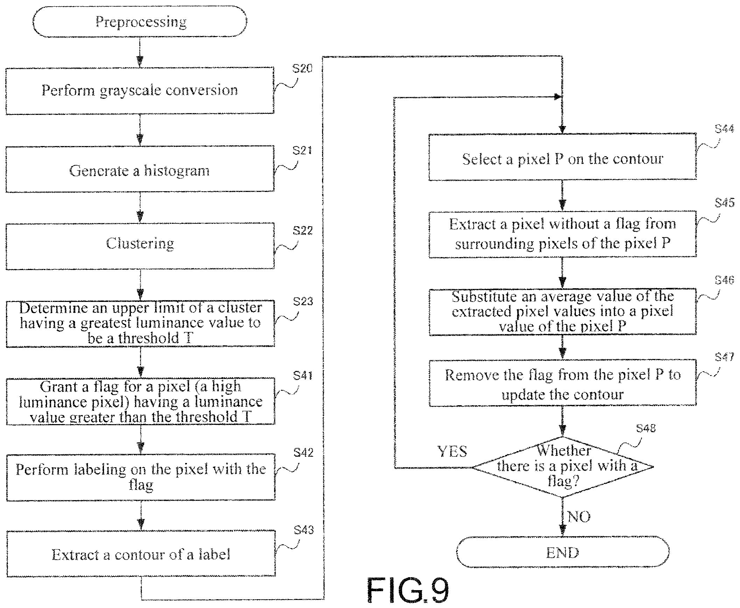

FIG. 9 is a flowchart illustrating a procedure of a luminance value correction process on a high luminance pixel in preprocessing in this implementation manner. Processes in step S20 to step S23 are the same as processes in the first implementation manner, and therefore, descriptions thereof are omitted. In this implementation manner, a process in step S24 performed by the conversion element 103 in the first implementation manner is substituted with processes of step S41 to step S48.

In step S41, a flag is granted for a pixel (a high luminance pixel) having a luminance value greater than a threshold T. In step S42, labeling is performed on the pixel with the flag. In step S43, a contour of a label is extracted.

Processes of step S44 to step S47 are performed on respective pixels on the contour in sequence. In step S44, a pixel on the contour is selected. The selected pixel herein is referred to as a pixel P. In addition, the pixels on the contour extracted in step S43 all have the same priority, and which pixel is first processed does not matter. In step S45, a pixel without a flag is extracted from surrounding pixels of the pixel P. The so-called surrounding pixels, for example, may be pixels (other than the pixel P) in a range of 3×3 to 7×7 with the pixel P as a center or may be four adjacent pixels of the pixel P and the like. In step S46, an average value of luminance values of the pixels extracted in step S45 is calculated, and the average value is substituted as the luminance value of the pixel P. In step S47, the flag is removed from the pixel P, so as to update the contour. In step S48, it is determined whether a pixel with a flag remains, and if so, step S44 is performed again to repeat the process. In addition, in pixel selection in step S44, a pixel whose timing of being extracted as a contour is earlier is more preferentially selected.

According to this implementation manner, interpolation can be smoothly performed on a high luminance pixel region by using luminance values of surrounding pixels. Therefore, it would be difficult for a corrected image to generate a false contour, so that accuracy of a character recognition process can be improved.

<Other implementation manners>

Descriptions of the implementation manners are merely used to illustratively explain the present invention, and the present invention is not limited to the specific forms. Various deformations may be performed on the present invention within the scope of the technical idea.

In the descriptions, a system for recognizing a number plate of a vehicle is described, but this system is applicable to any character recognition system. The present invention can be preferably applied to a case in which not only diffusely reflected light but also specularly reflected light of illumination and the like is projected into an image. For example, the present invention can be applied to a character recognition system used in Factory Automation (FA) for recognizing characters recorded on surfaces of aluminum cans or plastics. In addition, the preprocessing in the descriptions is applicable not only as a preprocessing of a character recognition process, but also, preferably, as preprocessing of other image recognition processes.

In addition, in the descriptions, a system that performs image capturing of a camera, a correction process on a high luminance pixel, and a character recognition process is described, but the image may also be obtained by element of a method other than photographing of a camera. For example, the present invention can be constituted as a character recognition device described below, where the character recognition device obtains an image by element of data communication or a recording medium and performs a correction process and a character recognition process on the obtained image. Moreover, the present invention can also be constituted as an image processing device that merely performs a correction process on an image.

In the descriptions, in order to determine a peak range from a histogram, clustering is used, but a peak range can also be determined by using a method other than clustering. For example, determining a degree threshold according to an overall luminance value of an image and determining a range having a degree greater than the threshold to be a peak range may be taken into consideration. At this time, also preferably, when a width of the peak range determined in this way is less than a specified value or the number of pixels in the peak range is less than a specified value, the peak range is not processed as a peak range. In addition, in this method, a saturated region may become a peak range, and in this case, a reference value may also be determined on the basis of a peak range having a second greatest luminance value rather than a peak range having a greatest luminance value.

In the descriptions, an example of providing a function by executing, by a general processor, a software program is described, but a dedicated hardware circuit may also be used to provide the function.

The character recognition device of this implementation manner may be mounted in any device such as a desktop computer, a notebook computer, a slate computer, or a smart phone. In addition, respective functions of the character recognition device in the descriptions do not need to be implemented by one device and may also be implemented by multiple devices by sharing their respective functions.

**Claims**

1. An image processing device (10) for performing a preprocessing of an image recognition process to an input image, comprising:

   a generation element (101) for generating a histogram of luminance values of the input image;
   a determination element (102) for determining a reference value for the luminance values on the basis of the histogram and determining a high luminance pixel, that is, a pixel having a luminance value greater than the reference value; and
   a conversion element (103) for converting the luminance value of the high luminance pixel into a luminance value lower than or equal to the reference value,
   wherein the determination element (102) is configured to determine one or more peak ranges of luminance values on the basis of the histogram and to determine the reference value on the basis of an upper limit value of the peak range having a greatest luminance value or having a second greatest luminance value, and wherein the determination element (102) is configured to calculate, for each bin of the histogram, a gravity center luminance value GLi and a difference between said gravity center luminance value GLi and the luminance value Li associated with the respective bin, the determination element (102) being further configured to cluster luminance values into multiple ranges on the basis of said differences, and to determine a range among the multiple ranges to be a peak range if a range width or a sum of a number of pixels in the range is greater than or equal to a threshold, and to exclude the range otherwise, wherein the gravity center luminance value satisfies: $GLi = \Sigma_j(Lj \times mj)/\Sigma_j(mj)$

in which, GLi indicates the gravity center luminance value of the luminance values in N pieces surrounding the i-th luminance value, Lj indicates the j-th luminance value, mj indicates the number of pixels of the j-th luminance value in the histogram, $\Sigma$ is a sum involving j and indicating a range of i-N/2 to i+N/2, and N, j and i are integers.

2. The image processing device (10) as claimed in claim 1, wherein:
the conversion element (103) is configured to convert the luminance value of the high luminance pixel into the reference value.

3. The image processing device (10) as claimed in claim 1, wherein:
the conversion element (103) is configured to convert the luminance value of the high luminance pixel into a luminance value calculated on the basis of luminance values of pixels surrounding the pixel.

4. A character recognition device, comprising:

the image processing device (10) as claimed in any one of claims 1 to 3; and
a recognition element (120) for performing a character recognition process on an image processed by the image processing device (10).

5. The character recognition device as claimed in claim 4, wherein:
the input image comprises at least one part of a number plate, and the recognition element (120) performs the character recognition process on a character drawn on the number plate.

6. An image processing method, executed by an image processing device (10) and comprising:

a generation step (S21) of generating a histogram of luminance values of an input image;
determining (S22) one or more peak ranges of luminance values on the basis of the histogram;
a determination step (S22) of determining a reference value for the luminance values on the basis of the histogram and determining (S23) a high luminance pixel, that is, a pixel having a luminance value greater than the reference value; and
a conversion step (S23, S24) of converting the luminance value of the high luminance pixel into a luminance value lower than or equal to the reference value,
wherein the reference value is determined on the basis of an upper limit value of the peak range having a greatest luminance value or having a second greatest luminance value, and
the step of determining one or more peak ranges of luminance values on the basis of the histogram comprises:

calculating (S30), for each bin of the histogram, a gravity center luminance value GLi;
calulating (S31) a difference between said gravity center luminance value GLi and the luminance value Li associated with the respective bin;
clustering (S33) luminance values into multiple ranges on the basis of said differences;

wherein the gravity center luminance value satisfies:

$$GLi = \Sigma_j(Lj \times mj)/\Sigma_j(mj)$$

in which, GLi indicates the gravity center luminance value of the luminance values in N pieces surrounding the i-th luminance value, Lj indicates the j-th luminance value, mj indicates the number of pixels of the j-th luminance value in the histogram, $\Sigma$ is a sum involving j and indicating a range of i-N/2 to i+N/2, and N, j and i are integers; and
determining (S34) a range among the multiple ranges to be a peak range, if a range width or a sum of a number of pixels in the range is greater than or equal to a threshold, and excluding the range otherwise.

7. A program, used for enabling a computer to execute each step of the method as claimed in claim 6.

**Patentansprüche**

1. Bildverarbeitungsvorrichtung (10) zum Durchführen einer Vorverarbeitung eines Bilderkennungsprozesses an einem eingegebenen Bild, umfassend:

ein Erzeugungselement (101) zum Erzeugen eines Histogramms von Luminanzwerten des eingegebenen Bilds;
ein Bestimmungselement (102) zum Bestimmen eines Referenzwertes für die Luminanzwerte basierend auf dem Histogramm und zum Bestimmen eines Pixels mit hoher Luminanz, das heißt eines Pixels, das einen Luminanzwert aufweist, der größer als der Referenzwert ist; und
ein Umwandlungselement (103) zum Umwandeln des Luminanzwerts des Pixels mit hoher Luminanz in einen Luminanzwert, der kleiner oder gleich dem Referenzwert ist,
wobei das Bestimmungselement (102) konfiguriert ist, um einen oder mehrere Spitzenbereiche von Luminanzwerten basierend auf dem Histogramm zu bestimmen, und um den Referenzwert, basierend auf einem oberen Grenzwert des Spitzenbereichs zu bestimmen, der einen größten Luminanzwert aufweist oder einen zweitgrößten Luminanzwert aufweist, und
wobei das Bestimmungselement (102) konfiguriert ist, um für jede Klasse des Histogramms, einen Schwerpunktzentrum-Luminanzwert GLi und eine Differenz zwischen dem Schwerpunktzentrum-Luminanzwert GLi und dem Luminanzwert Li, assoziiert mit der entsprechenden Klasse, zu berechnen, wobei das Bestimmungselement (102) ferner konfiguriert ist, um Luminanzwerte in mehrere Bereiche, basierend auf den Differenzen, zu clustern und einen Bereich unter den mehreren Bereichen als einen Spitzenbereich zu bestimmen, falls eine Bereichsbreite oder eine Summe einer Anzahl von Pixeln in dem Bereich größer als oder gleich einem Schwellenwert ist, und um den Bereich andernfalls auszuschließen,
wobei der Schwerpunktzentrum-Luminanzwert erfüllt:

$$GLi = \Sigma j(Lj \times mj) / \Sigma j(mj)$$

wobei GLi den Schwerpunktzentrum-Luminanzwert der Luminanzwerte in N Teilen, die den i-ten Luminanzwert umgeben, angibt, Lj den j-ten Luminanzwert angibt, mj die Anzahl der Pixel des j-ten Luminanzwertes in dem Histogramm angibt, $\Sigma$ eine Summe ist, die j einschließt und einen Bereich von i-N/2 bis i+N/2 angibt, und N, j und i ganze Zahlen sind.

2. Bildverarbeitungsvorrichtung (10) gemäß Anspruch 1, wobei:
das Umwandlungselement (103) konfiguriert ist, um den Luminanzwert des Pixels mit hoher Luminanz in den Referenzwert umzuwandeln.

3. Bildverarbeitungsvorrichtung (10) gemäß Anspruch 1, wobei:
das Umwandlungselement (103) konfiguriert ist, um den Luminanzwert des Pixels mit hoher Luminanz in einen Luminanzwert umzuwandeln, der basierend auf Luminanzwerten von Pixeln, die das Pixel umgeben, berechnet wird.

4. Zeichenerkennungsvorrichtung, die umfasst:

die Bildverarbeitungsvorrichtung (10) gemäß einem der Ansprüche 1 bis 3; und
ein Erkennungselement (120) zum Durchführen eines Zeichenerkennungsprozesses an einem Bild, verarbeitet durch die Bildverarbeitungsvorrichtung (10).

5. Zeichenerkennungsvorrichtung gemäß Anspruch 4, wobei:
das eingegebene Bild wenigstens einen Teil eines Nummernschildes umfasst, und das Erkennungselement (120) den Zeichenerkennungsprozess an einem Zeichen durchführt, das auf dem Nummernschild gezeichnet ist.

6. Bildverarbeitungsverfahren, das von einer Bildverarbeitungsvorrichtung (10) ausgeführt wird und umfasst:

einen Erzeugungsschritt (S21) des Erzeugens eines Histogramms von Luminanzwerten eines eingegebenen Bildes;
Bestimmen (S22) eines oder mehrerer Spitzenbereiche von Luminanzwerten basierend auf dem Histogramm;
einen Bestimmungsschritt (S22) des Bestimmens eines Referenzwertes für die Luminanzwerte basierend auf dem Histogramm und des Bestimmens (S23) eines Pixels mit hoher Luminanz, d.h. eines Pixels mit einem Luminanzwert, der größer als der Referenzwert ist; und
einen Umwandlungsschritt (S23, S24) des Umwandelns des Luminanzwertes des Pixels mit hoher Luminanz in einen Luminanzwert, der kleiner oder gleich dem Referenzwert ist,
wobei der Referenzwert basierend auf einem oberen Grenzwert des Spitzenbereichs, aufweisend einen größten Luminanzwert oder aufweisend einen zweitgrößten Luminanzwert bestimmt wird, und
der Schritt des Bestimmens eines oder mehrerer Spitzenbereiche von Luminanzwerten, basierend auf dem Histogramm, umfasst:

Berechnen (S30) für jede Klasse des Histogramms, einen Schwerpunktzentrum-Luminanzwert GLi;

Berechnen (S31) einer Differenz zwischen dem Schwerpunktzentrum-Luminanzwert GLi und dem Luminanzwert Li, assoziiert mit der jeweiligen Klasse;

Clustern (S33) von Luminanzwerten in mehrere Bereiche basierend auf den Differenzen;

wobei der Schwerpunktzentrum-Luminanzwert erfüllt ist:

$$GLi = \Sigma j(Lj \times mj)/\Sigma j(mj)$$

wobei GLi den Schwerpunktzentrum-Luminanzwert der Luminanzwerte in N Teilen, die den i-ten Luminanzwert umgeben, angibt, Lj den j-ten Luminanzwert angibt, mj die Anzahl der Pixel des j-ten Luminanzwertes in dem Histogramm angibt, $\Sigma$ eine Summe ist, die j einschließt und einen Bereich von i-N/2 bis i+N/2 angibt, und N, j und i ganze Zahlen sind; und

Bestimmen (S34) eines Bereichs unter den mehreren Bereichen, um ein Spitzenbereich zu sein, falls eine Bereichsbreite oder eine Summe einer Anzahl von Pixeln in dem Bereich größer als oder gleich einem Schwellenwert ist, und andernfalls der Bereich ausgeschlossen wird.

7. Programm, das verwendet wird, einem Computer zu ermöglichen, jeden Schritt des Verfahrens gemäß Anspruch 6 auszuführen.

**Revendications**

1. Dispositif de traitement d'image (10) pour réaliser un prétraitement d'un processus de reconnaissance d'image sur une image d'entrée, comprenant :

un élément de génération (101) pour générer un histogramme de valeurs de luminance de l'image d'entrée ;

un élément de détermination (102) pour déterminer une valeur de référence pour les valeurs de luminance sur la base de l'histogramme et déterminer un pixel de luminance élevée, c'est-à-dire un pixel ayant une valeur de luminance supérieure à la valeur de référence ; et

un élément de conversion (103) pour convertir la valeur de luminance du pixel de luminance élevée en une valeur de luminance inférieure ou égale à la valeur de référence,

dans lequel l'élément de détermination (102) est configuré pour déterminer une ou plusieurs plages de crêtes de valeurs de luminance sur la base de l'histogramme et déterminer la valeur de référence sur la base d'une valeur de limite supérieure de la plage de crêtes ayant une valeur de luminance la plus grande ou ayant une deuxième valeur de luminance la plus grande, et

dans lequel l'élément de détermination (102) est configuré pour calculer, pour chaque barre de l'histogramme, une valeur de luminance de centre de gravité GLi et une différence entre ladite valeur de luminance de centre de gravité GLi et la valeur de luminance Li associée à la barre respective, l'élément de détermination (102) étant en outre configuré pour regrouper des valeurs de luminance dans des plages multiples sur la base desdites différences, et déterminer une plage parmi les plages multiples comme étant une plage de crêtes si une largeur de plage ou une somme d'un nombre de pixels dans la plage est supérieure ou égale à un seuil, sinon exclure la plage, dans lequel la valeur de luminance de centre de gravité satisfait : $GLi = \Sigma_j (Lj \times mj)/\Sigma_j(mj)$

où GLi indique la valeur de luminance de centre de gravité des valeurs de luminance dans N morceaux entourant la i-ème valeur de luminance, Lj indique la j-ème valeur de luminance, mj indique le nombre de pixels de la j-ème valeur de luminance dans l'histogramme, $\Sigma$ est une somme impliquant j et indiquant une plage de i-N/2 à i+N/2, et N, j et i sont des entiers.

2. Dispositif de traitement d'image (10) selon la revendication 1, dans lequel :
l'élément de conversion (103) est configuré pour convertir la valeur de luminance du pixel de luminance élevée en la valeur de référence.

3. Dispositif de traitement d'image (10) selon la revendication 1, dans lequel :
l'élément de conversion (103) est configuré pour convertir la valeur de luminance du pixel de luminance élevée en une valeur de luminance calculée sur la base de valeurs de luminance de pixels entourant le pixel.

4. Dispositif de reconnaissance de caractère, comprenant :

le dispositif de traitement d'image (10) selon l'une quelconque des revendications 1 à 3 ; et un élément de reconnaissance (120) pour réaliser un processus de reconnaissance de caractère sur une image traitée par le dispositif de traitement d'image (10).

5. Dispositif de reconnaissance de caractère selon la revendication 4, dans lequel :
l'image d'entrée comprend au moins une partie d'une plaque minéralogique, et l'élément de reconnaissance (120) réalise le processus de reconnaissance de caractère sur un caractère tracé sur la plaque minéralogique.

**6.** Procédé de traitement d'image exécuté par un dispositif de traitement d'image (10) et comprenant :

une étape de génération (S21) pour générer un histogramme de valeurs de luminance d'une image d'entrée ;
une étape de détermination (S22) pour déterminer une ou plusieurs plages de crêtes de valeurs de luminance sur la base de l'histogramme ;
une étape de détermination (S22) pour déterminer une valeur de référence pour les valeurs de luminance sur la base de l'histogramme et déterminer (S23) un pixel de luminance élevée, c'est-à-dire un pixel ayant une valeur de luminance supérieure à la valeur de référence ; et
une étape de conversion (S23, S24) pour convertir la valeur de luminance du pixel de luminance élevée en une valeur de luminance inférieure ou égale à la valeur de référence,
dans lequel l'élément de référence est déterminé sur la base d'une valeur de limite supérieure de la plage de crêtes ayant une valeur de luminance la plus grande ou ayant une deuxième valeur de luminance la plus grande, et
l'étape de détermination d'une ou plusieurs plages de crêtes de valeurs de luminance sur la base de l'histogramme comprend :

le calcul (S30), pour chaque barre de l'histogramme, d'une valeur de luminance de centre de gravité, GLi ;
le calcul (S31) d'une différence entre ladite valeur de luminance de centre de gravité GLi et la valeur de luminance Li associée à la barre respective ;
le regroupement (S33) de valeurs de luminance dans des plages multiples sur la base desdites différences ;
dans lequel la valeur de luminance de centre de gravité satisfait :

$$GLi = \sum_{j} (Lj \times mj) / \sum_{j} (mj)$$

où GLi indique la valeur de luminance de centre de gravité des valeurs de luminance dans N morceaux entourant la i-ème valeur de luminance, Lj indique la j-ème valeur de luminance, mj indique le nombre de pixels de la j-ème valeur de luminance dans l'histogramme, $\Sigma$ est une somme impliquant j et indiquant une plage de i-N/2 à i+N/2, et N, j et i sont des entiers ; et
la détermination (S34) d'une plage parmi les plages multiples comme étant une plage de crêtes, si une largeur de plage ou une somme d'un nombre de pixels dans la plage est supérieure ou égale à un seuil, sinon l'exclusion de la plage.

**7.** Programme utilisé pour permettre à un ordinateur d'exécuter chaque étape du procédé selon la revendication 6.

FIG.1

(a)

```
                                        20

        ┌──────────────────────────┐
        │         Camera            │
        └──────────────────────────┘                    Character recognition device
                      ↕                                  (Image processing device)
                                                    10
┌───────────────────────────────────────────────────────────────────────────────────┐
│                                                                                     │
│     ┌────────────────┐ 11   ┌────────────────┐ 12  ┌────────────────┐ 13           │
│     │  Image input   │      │  Calculation   │     │ Storage device │              │
│     │    element     │      │  device (CPU)  │     │                │              │
│     └────────────────┘      └────────────────┘     └────────────────┘              │
│             ↕                      ↕                       ↕                        │
│  ─────────────────────────────────────────────────────────────────────────        │
│             ↕                      ↕                       ↕                        │
│     ┌────────────────┐ 14   ┌────────────────┐ 15  ┌────────────────┐ 16           │
│     │  Input device  │      │ Output device  │     │ Communications │              │
│     │                │      │                │     │    device      │              │
│     └────────────────┘      └────────────────┘     └────────────────┘              │
│                                                                                     │
└───────────────────────────────────────────────────────────────────────────────────┘
```

(b)

```
┌─────────────────────────────────────────────────────────────────────┐
│   Preprocessing                                                       │
│      element            100                                           │
│   ┌────────────────────────────────┐                                  │
│   │                           101  │      ┌──────────────────┐ 110    │
│   │  ┌──────────────────────┐      │      │    Character     │        │
│   │  │     Histogram        │      │      │ extraction element│        │
│   │  │ generation element   │      │      └──────────────────┘        │
│   │  └──────────────────────┘      │                                  │
│   │                           102  │      ┌──────────────────┐ 120    │
│   │  ┌──────────────────────┐      │      │    Character     │        │
│   │  │   High luminance     │      │      │recognition element│        │
│   │  │ pixel determination  │      │      └──────────────────┘        │
│   │  │      element         │      │                                  │
│   │  └──────────────────────┘      │                                  │
│   │                           103  │                                  │
│   │  ┌──────────────────────┐      │                                  │
│   │  │     Conversion       │      │                                  │
│   │  │      element         │      │                                  │
│   │  └──────────────────────┘      │                                  │
│   │                           104  │                                  │
│   │  ┌──────────────────────┐      │                                  │
│   │  │    Binarization      │      │                                  │
│   │  │      element         │      │                                  │
│   │  └──────────────────────┘      │                                  │
│   └────────────────────────────────┘                                  │
└─────────────────────────────────────────────────────────────────────┘
```

# FIG.2

**EP 3 214 579 B1**

Character recognition process

Obtain an input image — S10

Perform preprocessing — S11

Extract a character — S12

Recognize the character — S13

END

FIG.3

Preprocessing

Perform grayscale conversion — S20

Generate a histogram — S21

Clustering — S22

Determine an upper limit of a cluster having a greatest luminance value to be a threshold T — S23

Set a luminance value of a pixel (a high luminance pixel) having a luminance value greater than the threshold T to T — S24

END

FIG.4

FIG.5

Clustering

Calculate a gravity center of N pieces of surrounding luminance for each of bins ~S30

Shift=Gravity center–Luminance value ~S31

Quantify the shift into three values, that is, +, –, and 0 ~S32

Extract successive + columns and – columns from quantified arrangement and set a range from a starting point of + to a ending point of – to be a cluster ~S33

Exclude a cluster not satisfying a reference ~S34

END

# FIG.6

(a)

Histogram

Shift

Gravity center luminance value

Quantified shift

(b)

Cluster A                    Cluster B

FIG.7

(a) Before correction

(b) After correction

# FIG.8

```
            ┌─────────────────────┐
            │    Preprocessing    │
            └─────────────────────┘
                      │
                      ▼
         ┌──────────────────────────┐  S20
         │ Perform grayscale conversion │
         └──────────────────────────┘
                      │
                      ▼
         ┌──────────────────────────┐  S21
         │    Generate a histogram  │
         └──────────────────────────┘
                      │
                      ▼
         ┌──────────────────────────┐  S22
         │        Clustering        │
         └──────────────────────────┘
                      │
                      ▼
```

Determine an upper limit of a cluster having a greatest luminance value to be a threshold T — S23

Grant a flag for a pixel (a high luminance pixel) having a luminance value greater than the threshold T — S41

Perform labeling on the pixel with the flag — S42

Extract a contour of a label — S43

Select a pixel P on the contour — S44

Extract a pixel without a flag from surrounding pixels of the pixel P — S45

Substitute an average value of the extracted pixel values into a pixel value of the pixel P — S46

Remove the flag from the pixel P to update the contour — S47

Whether there is a pixel with a flag? — S48

YES

NO

END

FIG.9

(a) Number plate image including reflected light

(b) High luminance region

(c) Image obtained by performing a dynamic binarization process on (a)

FIG.10

**EP 3 214 579 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003123023 A
- US 20040184673 A1